# EUROPEAN PATENT SPECIFICATION

(11) **EP 1 581 608 B1**
(45) Date of publication and mention of the grant of the patent: **24.10.2012**
(21) Application number: 03814874.8
(22) Date of filing: 19.12.2003
(51) Int. Cl.: C11D 3/02, C11D 3/20, C11D 3/00, C01G 9/00, C11D 3/04, C11D 7/10

(54) **PROCESS OF PREPARING AUTOMATIC DISHWASHING COMPOSITIONS UTILIZING iN-SITU PREPARED WATER-SOLUBLE ZINC SALTS**
VERFAHREN ZUR HERSTELLUNG MASCHINELLER GESCHIRRSPÜLMITTEL MIT IN SITU ERZEUGTEN WASSERLÖSLICHEN ZINKSALZEN
PROCEDE DE PREPARATION DE COMPOSITIONS POUR LAVE-VAISSELLE AUTOMATIQUE FAISANT APPEL A DES SELS DE ZINC HYDROSOLUBLES PREPARES IN SITU

(30) Priority: 30.12.2002 US 437077 P
(43) Date of publication of application: 05.10.2005
(73) Proprietor: THE PROCTER & GAMBLE COMPANY, Cincinnati, OH 45202 (US)
(72) Inventor: SONG, Brian, Xiaoqing, West Chester, OH 45069 (US)
(74) Representative: Yorquez Ramirez, Maria Isabel
(86) International application number: PCT/US2003/040559
(87) International publication number: WO 2004/061070

(56) References cited:
- WO-A-00/56851
- US-A- 3 549 316
- US-A- 4 017 410
- US-A- 4 443 270

## Description

### FIELD OF THE INVENTION

The present invention relates to water-soluble zinc salts and their preparation for use in automatic dishwashing compositions rinse aid and/or products.

### BACKGROUND OF THE INVENTION

Automatic dishwashing compositions which provide glassware protection are well known. The use of water-soluble zinc salts, such as zinc salts of chloride, sulfate or acetate, have been disclosed for this purpose. A water-soluble zinc salt can be employed to prevent the corrosion of ceramic surfaces. Solid plates of slowly dissolving zinc metal alloys can be placed in contact with a detergent composition or low-foaming nonionic surfactant to provide corrosion protection to glassware. In fact, insoluble inorganic zinc compounds can also be employed in conjunction with a surfactant for similar purposes. Though zinc gluconate has been prepared in-situ for use in a liquid dishwashing detergent composition, there remains a need to provide a cost-effective process of preparing in-situ water-soluble zinc salts for use in suitable automatic dishwashing compositions and/or products to help prevent glassware corrosion.

It has surprisingly been found that cost effective water-soluble zinc salts may be prepared in-situ for use in automatic dishwashing rinse aid compositions and/or products. These water-soluble zinc salts when prepared in-situ and combined to form a rinse aid composition provides protection from glassware corrosion during the rinse cycle and promote consumer satisfaction in automatic dishwashing results.

### SUMMARY OF THE INVENTION

The present invention relates to a process for preparing a water-soluble zinc salt in-situ for use as a base or additive in preparing an automatic dishwashing rinse aid composition. The process comprises the steps of: (a) dispersing zinc oxide in water; (b) combining an acid as defined in claim 1 with the zinc oxide/water mixture; (c) mixing the zinc oxide/water mixture and the acid until the zinc oxide is at least partially dissolved; (d) maintaining the zinc oxide/water/acid mixture within an acidic pH range; and (e) combining the zinc oxide/water/acid mixture with at least one rinse aid ingredient to form the rinse aid composition.

### DETAILED DESCRIPTION OF THE INVENTION

The present invention relates to water-soluble zinc salts and their preparation for use in automatic dishwashing rinse aid compositions and/or products. The preparation of in-situ zinc salt disclosed herein requires zinc oxide to be dispersed in water and combined with an acid. The resulting mixture may be designed to be the base or added as an additive in a process for making or preparing an automatic dishwashing rinse aid composition and/or product.

Water-soluble zinc salts may be prepared in-situ by reacting zinc oxide with an acid according to the general formula:

2 Hₓ A + X ZnO → X Zn A_{2/x} + X H₂O

wherein A is an organic and/or an inorganic acid, and x is an integer that varies from 1 to 2. For example, water-soluble zinc nitrate can be prepared in-situ by reacting zinc oxide with nitric acid according to the formula:

2 HNO₃ + ZnO → Zn(NO₃)₂ + H₂O

The zinc oxide may be provided in any suitable amount. A suitable amount of zinc oxide is an amount that will deliver via an automatic dishwashing composition and/or product from about 0.01 mM to about 10 mM, alternatively about 0.02 mM to about 5 mM, alternatively about 0.05 mM to about 1 mM, and alternatively about 0.05 mM to about 0.5 mM of a water-soluble zinc salt compound or product to the wash and/or rinse liquor of an automatic dishwashing appliance during operation. Alternatively, a suitable amount of zinc oxide is an amount that will deliver via an automatic dishwashing composition and/or product from about 0.1 ppm to about 60 ppm, alternatively from about 0.1 ppm to about 30 ppm, alternatively from about 0.1 ppm to about 15 ppm, and/or alternatively from about 0.1 ppm to about 10 ppm of a water-soluble zinc salt compound or product to the wash and/or rinse liquor of an automatic dishwashing appliance during operation.

The zinc oxide may be provided in any suitable form. For example, the zinc oxide may be in powder form. The zinc oxide is first dispersed in water. At least a stoichiometric amount according to the above general formula, or alternatively a slight excess, of an acid is added slowly to the dispersion.

The mixture is then stirred continuously until the zinc oxide is at least partially dissolved, and alternatively fully dissolved. The order of addition of the process steps of the in-situ preparation of the zinc oxide/water/acid mixture is not critical. Thus, the process can first start with the addition of the acid, followed by zinc oxide dispersed in water- the later of which is slowly added with continuous stirring until the zinc oxide is fully dissolved or vice versa. Once the zinc oxide is at least partially dissolved, the zinc oxide/water/acid mixture will begin to clear. Once the zinc oxide/water/acid mixture is fully dissolved it will exhibit a clear solution. This completes the in-situ acid neutralization process.

Suitable automatic dishwashing ingredients that may be added to the zinc oxide/water/acid mixture to prepare a rinse aid composition and/or product include, but are not limited to: an acid, a hydrotrope, a thickener, a binder, a dispersant polymer, a carrier medium, a surfactant, a perfume, a dye, and mixtures thereof.

For example, citric acid, sodium cumene sulfonate, Acusol® polymer, ethanol, non-ionic surfactant, perfume, dye, and mixtures thereof may be added sequentially to the zinc oxide/water/acid mixture to make a liquid rinse aid composition and/or product. In another example, a binder or a solid surfactant (e.g. solid at 25°C) may be added to formulate a solid rinse aid composition. In another example, a detergent builder, an enzyme, surfactant, a defoamer, and mixtures thereof may be added to the zinc oxide/water/acid mixture to formulate a liquid detergent composition. In yet another example, an alkalinity builder, a surfactant, a bleach, a bleach activator, and mixtures thereof may be added to the zinc oxide/water/acid mixture to formulate a solid detergent composition.

### Acid

The organic and/or inorganic acid in any suitable amount may be used to prepare in-situ water-soluble zinc salts for use in automatic dishwashing rinse aid compositions and/or products. Suitable acids to be used the in-situ water-soluble zinc salt preparation process are acetic acid, aspartic acid, benzoic acid, boric acid, bromic acid, formic acid, gluconic acid, glutamic acid, hydrochloric acid, lactic acid, malic acid, nitric acid, sulfamic acid, sulfuric acid, tartaric acid, and mixtures thereof.

Any acid that leads to precipitation of the zinc salt should not be used in the in-situ water-soluble zinc salt preparation process. For example, citric acid leads to precipitation of an insoluble zinc salt. However, as disclosed below, such precipitation acids may be added to the mixture after the in-situ process is completed.

Adding an acid after the in-situ water-soluble zinc salt preparation process, such as in the preparation of an automatic dishwashing composition, enables the water-soluble zinc salt to at least partially dissolve, alternatively to fully dissolve, and alternatively remain dissolved. The acid may act to stabilize the composition against precipitation in the product prior to use. The acid also helps to eliminate precipitation on hard surfaces, such as on flatware, glasses, dishes and/or components inside the automatic dishwashing appliance itself, during the wash and/or rinse cycle.

When preparing in-situ water-soluble zinc salts to be used in solid rinse aid composition, certain non-precipitation acids will not result in precipitation of the water-soluble zinc salt in the rinse aid composition and/or product itself or in rinse liquor of the automatic dishwashing appliance during operation. For example, nitric acid, hydrochloric acid, and mixtures thereof, are typically non-precipitation acids. Conversely, precipitation acids, like phosphoric acid, citric acid, and mixtures thereof, may result in precipitation of an insoluble zinc salt during preparation of in-situ water-soluble zinc salts. For example, a precipitation acid may be added only after the water-soluble zinc salt is at least first partially dissolved, and alternatively fully dissolved, in a non-precipitation acid, such as nitric acid, hydrochloric acid, and mixtures thereof. Furthermore, the dissolved water-soluble zinc salt (i.e. those dissolved in a non-precipitation acid) should have the pH maintained in the acidic pH range prior to adding a subsequent precipitating acid to the mixture in order to prevent insoluble materials from forming in the rinse aid composition and/or product itself, or in the rinse liquor of the automatic dishwashing appliance during the rinse cycle. A suitable amount of acid may be determined stoichimetrically using the formula:

2 Hₓ A + X ZnO → X Zn A_{2/x} + X H₂O

wherein A is an organic and/or an inorganic acid, and x is an integer that varies from 1 to 2. Suitable acids are typically present in the preparation of in-situ water-soluble zinc salt range from about 0.01% to about 25%, alternatively from about 0.5% to about 20%, and alternatively from about 1% to about 10%, by weight of the mixture.

In one non-limiting embodiment, an acid selected from the group consisting of acetic acid, formic acid, gluconic acid, glutamic acid, hydrochloric acid, malic acid, nitric acid, sulfuric acid, and mixtures thereof, by weight of the mixture may be used in the preparation of in-situ water-soluble zinc salt.

### pH

The pH of the zinc oxide/water/acid mixture may be measured directly at the end of the in-situ process. However, when the zinc oxide/water/acid mixture is combined with at least one rinse aid ingredient to form rinse aid composition, the pH of the rinse aid composition should be measured as a 10% concentration in an aqueous solution.

Suitable pHs range from about 1 to about 5, alternatively from about 1 to about 4, and alternatively from about 1 to about 3. A lower acidic pH range will tend to reduce incompatibility and negative interaction of rinse aid ingredients. A slightly higher acidic pH range will allow for some flexibility in product formulation.

### Zinc Salts Prepared Using In-situ Process

Any suitable water-soluble salt of zinc in any suitable amount may be prepared in-situ by reacting zinc oxide with an inorganic and/or organic acid. In-situ water-soluble zinc salts suitable for use in automatic dishwashing can be prepared for use in liquid compositions products, solid compositions and/or products, and mixtures thereof.

Water-soluble zinc salts that may be prepared in-situ include zinc acetate, zinc benzoate, zinc borate, zinc bromide, zinc chloride, zinc formate, zinc gluconate, zinc lactate, zinc laurate, zinc malate, zinc nitrate, zinc perborate, zinc sulfate, zinc sulfamate, zinc tartrate, and mixtures thereof.

The in-situ water-soluble zinc salt prepared by this process may exist in any physical form, including, but not limited to, liquid, solid, and combinations thereof. The in-situ water-soluble zinc salt may be combined with automatic dishwashing ingredients to form an automatic dishwashing composition which may also exist in any physical form, including, but not limited to, liquid, solid, and combinations thereof.

It should be understood that every maximum numerical limitation given throughout this specification would include every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

## Claims

1. A process for preparing an in-situ water-soluble zinc salt for use as a base or additive in preparing an automatic dishwashing rinse aid composition, said process is **characterized by** comprising the steps of:
a) dispersing zinc oxide in water;
b) combining an acid with said zinc oxide/water mixture wherein said acid is selected from the group consisting of acetic acid, aspartic acid, benzoic acid, boric acid, bromic acid, formic acid, gluconic acid, glutamic acid, hydrochloric acid, lactic acid, malic acid, nitric acid, sulfamic acid, sulfuric acid, tartaric acid, and mixtures thereof;
c) mixing said zinc oxide/water mixture and said acid until said zinc oxide is at least partially dissolved;
d) maintaining said zinc oxide/water/acid mixture within an acidic pH range; and
e) combining said zinc oxide/water/acid mixture with at least one rinse aid ingredient to form a rinse aid composition;
wherein the order of addition of said process steps (a) and (b) is not critical.

2. A process according to Claim 1, wherein said zinc oxide/water/acid mixture has a pH of less than about 5.

3. A process according to any preceding claim, wherein zinc oxide is provided in an amount that will deliver via an automatic dishwashing composition and/or product from about 0.01 mM to about 10 mM, alternatively from about 0.02 mM to about 5 mM, alternatively from about 0.05 mM to about 1 mM, and alternatively from about 0.05 mM to about 0.5 mM, of a water-soluble zinc salt compound or product to the wash and/or rinse liquor of an automatic dishwashing appliance during operation.

4. A process according to any preceding claim, wherein said acid is provided at least in an amount determined stoichimetrically using the formula:
2HXA + XZnO→ZnA2/x + XH2O
wherein A is an organic and/or an inorganic acid, and x is an integer that varies from 1 to 2.

5. A process according to any preceding claim, wherein a water- soluble zinc salt is prepared in-situ, wherein said salt is selected from the group consisting of zinc acetate, zinc benzoate, zinc borate, zinc bromide, zinc chloride, zinc formate, zinc gluconate, zinc lactate, zinc laurate, zinc malate, zinc nitrate, zinc perforate, zinc sulfate, zinc sulfamate, zinc tartrate, and mixtures thereof.

6. A process according to any preceding claim, wherein said at least one rinse aid ingredient is selected from tile group consisting of an acid, a hydrotrope, a thickener, a binder, a dispersant polymer, a carrier medium, a surfactant, a perfume, a dye, and mixtures thereof.

## Patentansprüche

1. Verfahren zum Herstellen eines in-situ wasserlöslichen Zinksalzes zum Gebrauch als Basis oder Zusatzstoff bei der Herstellung einer Maschinen-Geschirrspülhilfsmittelzusammensetzung, wobei das Verfahren **dadurch gekennzeichnet ist, dass** es die folgenden Schritte umfasst:
a) Dispergieren von Zinkoxid in Wasser;
b) Kombinieren einer Säure mit der Zinkoxid-Wasser-Mischung, wobei die Säure ausgewählt ist aus der Gruppe bestehend aus Essigsäure, Asparaginsäure, Benzoesäure, Borsäure, Bromsäure, Methansäure, Gluconsäure, Glutaminsäure, Salzsäure, Milchsäure, Äpfelsäure, Salpetersäure, Sulfaminsäure, Schwefelsäure, Weinsäure und Mischungen davon;
c) Mischen der Zinkoxid-Wasser-Mischung und der Säure, bis das Zinkoxid mindestens teilweise gelöst ist;
d) Kombinieren der Zinkoxid-Wasser-Säure-Mischung innerhalb eines sauren pH-Bereichs; und
e) Kombinieren der Zinkoxid-Wasser-Säure-Mischung mit mindestens einem Spülhilfsmittelinhaltsstoff, um eine Spülhilfsmittelzusammensetzung zu bilden;
wobei die Zugabereihenfolge der Verfahrensschritte (a) und (b) nicht entscheidend ist.

2. Verfahren nach Anspruch 1, wobei die Zinkoxid-Wasser-Säure-Mischung einen pH von weniger als ungefähr 5 aufweist.

3. Verfahren nach einem der vorstehenden Ansprüche, wobei Zinkoxid in einer Menge bereitgestellt wird, die über eine Maschinen-Geschirrspülzusammensetzung und/oder ein -produkt von ungefähr 0,01 mM bis ungefähr 10 mM, als Alternative dazu von ungefähr 0,02 mM bis ungefähr 5 mM, als Alternative dazu von ungefähr 0,05 mM bis ungefähr 1 mM und als Alternative dazu von ungefähr 0,05 mM bis ungefähr 0,5 mM einer wasserlöslichen Zinksalzverbindung oder eines -produkts an die Wasch - und/oder Spülflotte einer automatischen Geschirrspülmaschine während des Betriebs abgibt.

4. Verfahren nach einem der vorstehenden Ansprüche, wobei die Säure mindestens in einer Menge bereitgestellt wird, die stöchiometrisch mit der folgenden Formel bestimmt wird:
2 HXA + XZnO XZnA2/x + XH2O
worin A eine organische und/oder anorganische Säure ist und x eine ganze Zahl ist, die von 1 bis 2 variiert.

5. Verfahren nach einem der vorstehenden Ansprüche, wobei ein wasserlösliches Zinksalz in-situ hergestellt wird, wobei das Salz ausgewählt ist aus der Gruppe bestehend aus Zinkacetat, Zinkbenzoat, Zinkborat, Zinkbromid, Zinkchlorid, Zinkformiat, Zinkgluconat, Zinklactat, Zinklaurat, Zinkmalat, Zinknitrat, Zinkperborat, Zinksulfat, Zinksulfamat, Zinktartrat und Mischungen davon.

6. Verfahren nach einem der vorstehenden Ansprüche, wobei der mindestens eine Spülhilfsmittelinhaltsstoff ausgewählt aus ist der Gruppe bestehend aus einer Säure, einer hydrotropen Verbindung, einem Verdickungsmittel, einem Bindemittel, einem dispergierenden Polymer, einem Trägermedium, einem Tensid, einem Duftstoff, einem Farbstoff und Mischungen davon.

## Revendications

1. Procédé pour préparer in situ un sel de zinc hydrosoluble pour une utilisation en tant que base ou additif dans la préparation d'une composition d'aide au rinçage pour le lavage automatique de la vaisselle, ledit procédé est **caractérisé en ce qu'**il comprend les étapes consistant à :
a) disperser de l'oxyde de zinc dans de l'eau ;
b) combiner un acide avec ledit mélange oxyde de zinc/eau, dans lequel ledit acide est choisi dans le groupe constitué d'acide acétique, acide aspartique, acide benzoïque, acide borique, acide bromique, acide formique, acide gluconique, acide glutamique, acide chlorhydrique, acide lactique, acide malique, acide nitrique, acide sulfamique, acide sulfurique, acide diacétyltartrique, et leurs mélanges ;
c) mélanger ledit mélange oxyde de zinc/eau et ledit acide jusqu'à ce que ledit oxyde de zinc soit au moins partiellement dissous ;
d) combiner ledit mélange oxyde de zinc/eau/acide dans une gamme de pH acide ; et
e) combiner ledit mélange oxyde de zinc/eau/acide à au moins un ingrédient auxiliaire de rinçage de façon à former une composition d'aide au rinçage ;
dans lequel l'ordre d'addition desdites étapes de procédé (a) et (b) n'est pas crucial.

2. Procédé selon la revendication 1, dans lequel ledit mélange oxyde de zinc/eau/acide a un pH inférieur à environ 5.

3. Procédé selon l'une quelconque des revendications précédentes, dans lequel l'oxyde de zinc est fourni en une quantité qui libérera par l'intermédiaire d'une composition et/ou produit de lavage automatique de la vaisselle d'environ 0,01 mm à environ 10 mM, en variante d'environ 0,02 mm à environ 5 mM, en variante d'environ 0,05 mm à environ 1 mM, et en variante d'environ 0,05 mm à environ 0,5 mM, d'un composé ou produit à base de sel de zinc hydrosoluble à la liqueur de lavage et/ou de rinçage d'un appareillage de lavage automatique de la vaisselle pendant l'utilisation.

4. Procédé selon l'une quelconque des revendications précédentes, dans lequel ledit acide est fourni au moins en une quantité déterminée de façon stoechiométrique en utilisant la formule :
2 Hx A + X ZnO à X Zn A_{2/x} + X H₂O
dans laquelle A est un acide organique et/ou inorganique, et x est un nombre entier qui varie de 1 à 2.

5. Procédé selon l'une quelconque des revendications précédentes, dans lequel un sel de zinc hydrosoluble est préparé in situ, dans lequel ledit sel est choisi dans le groupe constitué d'acétate de zinc, benzoate de zinc, borate de zinc, bromure de zinc, chlorure de zinc, formiate de zinc, gluconate de zinc, lactate de zinc, laurate de zinc, malate de zinc, nitrate de zinc, perborate de zinc, sulfate de zinc, sulfamate de zinc, tartrate de zinc, et leurs mélanges.

6. Procédé selon l'une quelconque des revendications précédentes, dans lequel ledit au moins un ingrédient auxiliaire de rinçage est choisi parmi le groupe constitué d'un acide, un hydrotrope, un épaississant, un liant, un polymère dispersant, un milieu formant véhicule, un agent tensioactif, un parfum, une teinture, et leurs mélanges.
